# DEMANDE DE BREVET EUROPEEN

(11) **EP 1 460 345 A1**
(43) Date de publication de la demande: **22.09.2004**
(21) Numéro de dépôt: 04290645.3
(22) Date de dépôt: 10.03.2004
(51) Int. Cl.: F24D 3/14, E04B 5/48, E04F 15/18

(54) **Plaque à sol équipée de plots de retenue de tubes de chauffage ou de refroidissement par le sol**

(30) Priorité: 14.03.2003 FR 0303160
(71) Demandeur: Knauf SNC, 68600 Wolfgantzen (FR)
(72) Inventeur:
(74) Mandataire: Cabinet HERRBURGER

(57) **Abrégé**

Plaque à sol pour une installation de chauffage ou de refroidissement par le sol à tubes d'eau noyés dans une chape de béton, cette plaque étant équipée sur sa face supérieure d'un réseau de plots à contre dépouille régulièrement espacés permettant la retenue des tubes de chauffage ou de refroidissement par le sol et étant destinée à être combinée à d'autres plaques à sol identiques ou analogues pour former un tapis à plots continu recouvrant le sol d'un local et recevant les tubes de chauffage ou de refroidissement par le sol pour les bloquer en place jusqu'à la coulée et la prise du béton.

Elle est constituée d'une part par une plaque de base (10) thermiquement isolante formant semelle dont la face supérieure (5) est essentiellement plane et d'autre part par une plaque de recouvrement (11) fixée à la plaque de base (10) par sa face inférieure (6) et portant le réseau de plots (21) sur sa face supérieure.

## Description

La présente invention concerne une plaque à sol pour une installation de chauffage ou de refroidissement par le sol à tubes d'eau noyés dans une chape de béton.

Une installation de chauffage ou de refroidissement par le sol comprend classiquement un ou plusieurs ensembles de tubes de circulation d'eau intégrés à la chape du sol.

Ces tubes doivent être répartis suivant un tracé aussi régulier que possible et conserver leur positionnement pendant la réalisation de la chape, jusqu'à la prise du béton.

Une technique ancienne consistait à fixer les tubes au treillis métallique d'armature du béton.

Une technique plus récente et plus appropriée pour l'efficacité de l'installation consiste à utiliser des plaques à sol en un matériau synthétique alvéolaire en particulier en polystyrène expansé qui comportent des moyens permettant d'accrocher les tubes de chauffage ou de refroidissement par le sol et de les maintenir en place.

Ces moyens d'accrochage sont constitués par un réseau de plots à contre dépouille permettant la retenue des tubes de chauffage ou de refroidissement par le sol qui sont régulièrement espacés sur la face supérieure de la plaque à sol.

Une telle plaque à sol est destinée à être combinée à d'autres plaques à sol identiques ou analogues pour former un tapis à plots continu recouvrant le sol d'un local à chauffer ou à refroidir et recevant les tubes de chauffage ou de refroidissement par le sol pour les bloquer en place jusqu'à la coulée et la prise du béton.

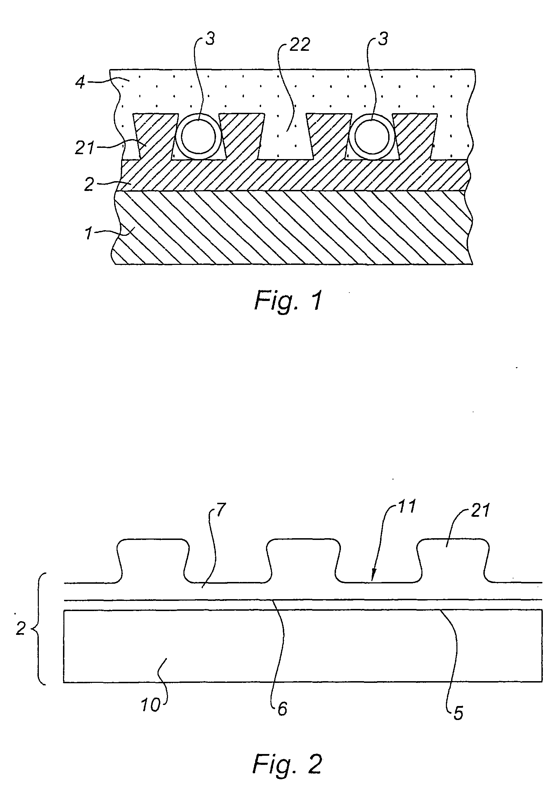

La vue en coupe de la figure 1 montre la structure d'une installation de chauffage ou de refroidissement par le sol.

Cette installation est placée sur une dalle en béton 1 qui reçoit des plaques à sol 2 équipées de plots 21 définissant des intervalles 22 ayant une section en forme de trapèze, c'est-à-dire à contre dépouille pour recevoir des tubes 3 dans lesquels circule en règle générale de l'eau chaude ou éventuellement de l'eau froide.

L'ensemble est revêtu d'une chape 4 qui bloque les tubes.

A la mise en place, cette chape est classiquement très liquide pour bien pénétrer dans les intervalles et assurer à la fois la tenue des tubes en complément à la tenue assurée par les plaques à sol 2 et un contact thermique.

La chape 4 peut en outre recevoir un revêtement tel qu'un dallage, un carrelage ou même du parquet.

Les plaques à sol sont classiquement moulées en une seule étape, y compris le réseau de plots, en un polystyrène expansé ayant en règle générale une masse volumique comprise entre 20 et 40 kg par m³, de préférence comprise entre 23 et 32 kg par m³, de façon à obtenir un rapport qualité / coût optimum.

L'épaisseur de ces plaques est actuellement de l'ordre de 15 à 40 mm.

L'évolution des réglementations concernant aussi bien les maisons individuelles que les immeubles collectifs exigera que les plaques à sol aient une résistance thermique de beaucoup supérieure, de sorte que leur épaisseur devra être de l'ordre de 70 mm.

Or, des plaques à sol d'une telle épaisseur ne peuvent pas être moulées en une seule étape sinon à un coût prohibitif.

Il est en outre à noter que sur le chantier, la pose des tubes de chauffage ou de refroidissement par le sol ne peut s'effectuer qu'en marchant sur ces plaques.

L'opérateur ne peut alors pas éviter de marcher sur les plots compte tenu de leur proximité, et ceux-ci sont donc sollicités en écrasement.

Cependant, le matériau constitutif des plots ainsi que leur caractéristiques géométriques ne leur permettent pas toujours de supporter le poids de l'opérateur.

Ils subissent par suite une déformation qui ne leur permet plus d'assurer correctement la retenue des tubes.

Pour remédier à ce problème, on a déjà proposé conformément au document EP-0 811 808 d'appliquer sur la face supérieure des plaques à sol équipées du réseau de plots un film thermoformé ayant une géométrie similaire.

Les plots se trouvent donc ainsi recouverts d'un capuchon de protection de nature à améliorer leurs caractéristiques mécaniques.

Un tel processus augmente toutefois dans une large mesure le prix de revient des plaques à sol et n'est en fait pas viable sur le plan économique.

La présente invention a pour objet de remédier aux inconvénients susmentionnés en proposant une plaque à sol ayant une résistance mécanique améliorée et parallèlement apte à satisfaire aux réglementations futures tout en étant d'un prix de revient suffisamment faible.

Selon l'invention, une telle plaque à sol est caractérisée en ce qu'elle est constituée d'une part par une plaque de base thermiquement isolante formant semelle dont la face supérieure est essentiellement plane et d'autre part par une plaque de recouvrement fixée à la plaque de base par sa face inférieure et portant le réseau de plots sur sa face supérieure.

On peut envisager de réaliser une telle plaque à sol en deux étapes de moulage à partir de matériaux ayant des masses volumiques différentes, c'est-à-dire de mouler indépendamment une plaque de base formant semelle en un matériau ayant une masse volumique relativement faible, et une plaque de recouvrement en un matériau de masse volumique plus élevée, et donc ayant des caractéristiques mécaniques supérieures.

Néanmoins, ce double moulage génère un surcoût non négligeable, de sorte qu'il ne peut que difficilement être utilisé dans la pratique.

Pour remédier à cet inconvénient, la plaque de base est de préférence réalisée en un matériau isolant, notamment en plaques en polyuréthane, en polystyrène expansé ou en polystyrène extrudé.

Le polystyrène expansé moulé est fait à partir de grains essentiellement soudés entre eux qui ont tendance à se détacher.

Au contraire, le polystyrène extrudé ou le polyuréthane correspondent à une mousse homogène et continue ayant des caractéristiques supérieures et en particulier une conductivité thermique λ plus favorable.

Des plaques à sol ainsi réalisées pourront donc avoir une plus faible épaisseur, et par suite être moins onéreuses tout en satisfaisant aux réglementations thermiques.

La plaque de recouvrement peut être assemblée à la plaque de base d'une façon quelconque, notamment par collage par exemple par une colle thermofusible, ou encore au moyen de bandes adhésives, agrafage...

Cet assemblage peut être effectué préalablement ou directement sur le chantier.

Il est essentiel que lors de la mise en place, la chape liquide qui est coulée sur la face supérieure du tapis constitué par l'assemblage de plaques à sol ne puisse pas couler vers la face inférieure de celui-ci en s'introduisant dans des fentes présentes au niveau des joints entre les différentes plaques.

Par suite, les plaques à sol doivent être équipées au niveau de leurs bords d'organes d'accrochage aptes à garantir l'étanchéité entre la face supérieure et la face inférieure du tapis au niveau des plaques voisines.

Selon l'invention, de tels organes d'accrochage peuvent être situés à la périphérie de la plaque de base ou à la périphérie de la plaque de recouvrement.

Dans le premier cas, les organes d'accrochage peuvent être classiquement constitués par une double feuillure haute prévue sur deux côtés contigus de la plaque de base et coopérant avec une double feuillure basse correspondante prévue sur les deux autres côtés contigus de celle-ci.

Une autre possibilité consiste à mettre en oeuvre des organes d'accrochage constitués par des créneaux tels que divulgués dans le document non publié FR-02 15 342.

Il est également possible conformément à l'invention d'équiper la plaque de base d'organes d'accrochage constitués par des bossages discontinus.

Une telle configuration nécessite un positionnement relatif précis des plaques voisines les unes par rapport aux autres, ce qui peut être intéressant pour que les plots d'une plaque soient positionnés en alignement avec ceux de la plaque adjacente.

Selon une autre caractéristique de l'invention, les plots équipant la plaque de recouvrement sont reliés entre eux par des nervures de réception des tubes de chauffage ou de refroidissement par le sol.

Ces nervures permettent aux tubes de chauffage ou de refroidissement par le sol d'être surélevés par rapport aux plaques à sol, ce qui permet à la chape de mieux les entourer, garantissant ainsi un échange thermique optimum.

Selon une première variante de l'invention la plaque de recouvrement est constituée par un élément réalisé en un matériau synthétique injecté, notamment en polystyrène, polypropylène ou polyéthylène.

Une telle plaque de recouvrement peut avantageusement être constituée par un élément grillagé comportant deux ensembles de nervures parallèles régulièrement espacés essentiellement perpendiculaires entre eux.

Un tel élément grillagé est équipé au niveau de chaque intersection entre les nervures d'un ensemble de languettes inclinées vers l'extérieur et réparties selon un cercle.

Cet ensemble de languettes correspond à un plot.

La géométrie d'un tel élément grillagé doit bien entendu être adaptée de façon à réduire au maximum la quantité de matière synthétique nécessaire et par suite le coût.

Selon une autre caractéristique de cette première variante de l'invention, la plaque de recouvrement est équipée sur sa face inférieure d'une série de picots susceptibles de s'accrocher dans le matériau synthétique constitutif de la plaque de base pour permettre l'assemblage de ces deux plaques.

Par suite, les picots font en quelque sorte office de « harpons ».

Selon une seconde variante de l'invention, la plaque de recouvrement est constituée par un film en un matériau synthétique thermoformé.

Dans un tel film, les plots sont donc réalisés par thermoformage.

L'utilisation de moules ou matrices déformables permet de façon connue en elle-même d'obtenir les surfaces en contre dépouille nécessaires.

Conformément à cette seconde variante, le film thermoformé peut avantageusement être assemblé à la plaque de base par collage, au moyen d'une colle thermofusible, de bandes adhésives..., ce, soit sur le chantier, soit en amont de celui-ci.

Selon l'invention, le matériau constitutif de la feuille thermoformée peut comporter une charge en un matériau très conducteur de la chaleur de nature à améliorer les échanges thermiques.

Il est également possible d'appliquer un revêtement réfléchissant sur la face inférieure de la plaque de recouvrement de façon à augmenter les performances thermiques de l'isolant en particulier s'il est constitué de polystyrène expansé.

La plaque à sol conforme à l'invention présente de multiples avantages par rapport aux plaques à sol de l'art antérieur.

En particulier, outre les avantages susmentionnés, il est possible d'utiliser pour la plaque de base, des matériaux synthétiques isolants possédant d'excellentes caractéristiques thermiques, mais qui ne sont pas susceptibles d'être moulés dans des conditions économiques satisfaisantes.

De plus, la configuration particulière de la plaque de recouvrement permet d'obtenir des plots ayant des contre dépouilles plus importantes, donc permettant une meilleure retenue des tubes de chauffage ou de refroidissement par le sol.

Par ailleurs, les plaques de base et les plaques de recouvrement peuvent être livrées à part et directement assemblées sur le chantier ; dans ce cas, les dimensions utiles de ces plaques peuvent être très différentes sans pour autant gêner la pose de celles-ci.

Il est ainsi possible d'optimiser les coûts de fabrication en réalisant chacun des deux types de plaques dans les meilleures conditions économiques.

Il est bien entendu également possible de livrer sur un chantier des plaques à sol totalement assemblées.

Les caractéristiques de la plaque à sol qui fait l'objet de l'invention seront décrites plus en détail en se référant aux dessins annexés dans lesquels :
- la figure 1 est une vue en coupe d'une installation de chauffage ou de refroidissement par le sol classique ;
- la figure 2 est une coupe schématique d'une plaque à sol conforme à l'invention ;
- la figure 3 représente une plaque de recouvrement conforme à la première variante de l'invention ;
- la figure 4 représente un détail de la figure 3 ;
- la figure 5 est une vue de dessus d'une plaque de recouvrement correspondant à la seconde variante de l'invention.

Selon la figure 2, la plaque à sol 2 est constituée d'une part par une plaque de base 10 thermiquement isolante formant semelle dont la face supérieure 5 est essentiellement plane et d'autre part par une plaque de recouvrement 11 portant le réseau de plots 21 sur sa face supérieure.

La plaque de base 10 est réalisée en un matériau synthétique extrudé.

La face inférieure 6 de la plaque de recouvrement 11 est fixée à la face supérieure 5 de la plaque de base 10 au moyen d'organes de fixation tels que des picots, une couche de colle ou encore une bande adhésive double face... non représentés sur la figure.

Des organes d'accrochage non représentés, équipant la périphérie de la plaque de base 10 ou de la plaque de recouvrement 11 permettent l'assemblage d'une série de plaques à sol 2 disposées côte à côte.

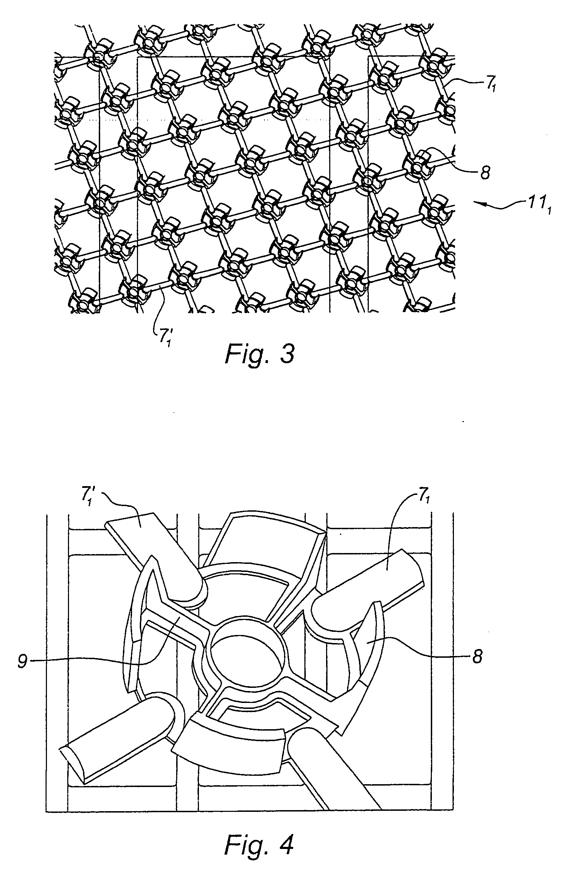

Selon les figures 3 à 5, des nervures de réception 7 des tubes de chauffage ou de refroidissement par le sol qui ne sont pas représentées sur la figure 2 relient les différents plots 21 de façon à surélever les tubes de chauffage ou de refroidissement par le sol et à permettre un enrobage satisfaisant de ces tubes par la chape en béton.

Selon la figure 3, la plaque de recouvrement 11₁ est constituée par un élément grillagé réalisé en un matériau synthétique injecté.

Cet élément comporte deux ensembles 7₁, 7'₁ de nervures de réception 7 des tubes de chauffage ou de refroidissement par le sol parallèles régulièrement espacés.

Les nervures 7 des deux ensembles 7₁, 7'₁ sont essentiellement perpendiculaires entre elles.

Selon les figures 3 et 4, au niveau de chaque intersection entre des nervures 7 des deux ensembles 7₁, 7'₁, il est prévu un ensemble de languettes 8 inclinées vers l'extérieur qui sont réparties selon un cercle.

Ces languettes 8 correspondent aux plots 21 et sont en outre réunies par barrette radiale 9 de façon à garantir la rigidité de la plaque de recouvrement 11₁.

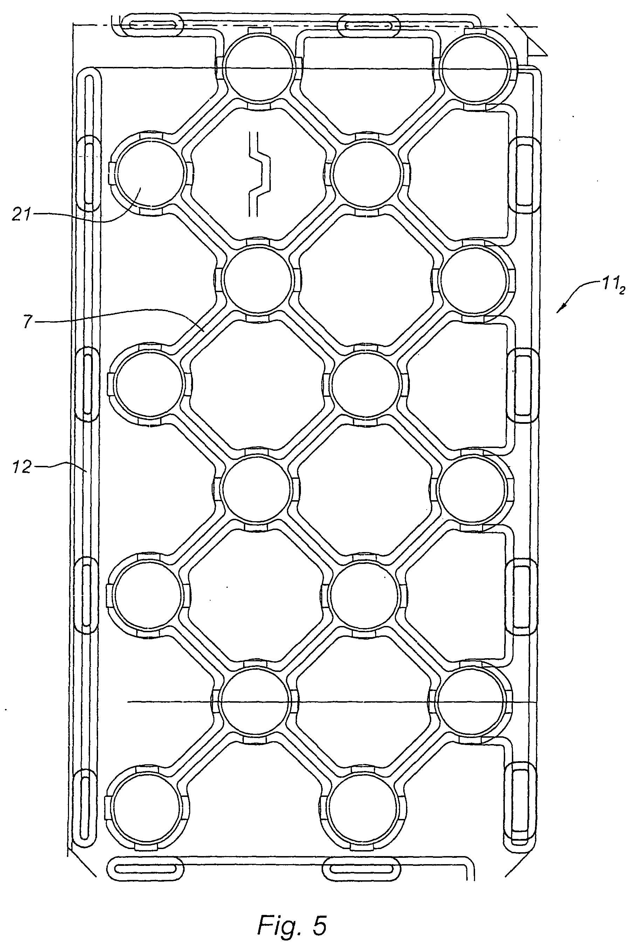

Selon la figure 5, la plaque de recouvrement 11₂ est constituée par un film thermoformé sur lequel les plots 21 ainsi que les nervures 7 reliant ces plots ont été réalisées par thermoformage.

Un ensemble de bossages 12 prévus à la périphérie de la plaque de recouvrement 11₂ permet l'assemblage de plusieurs plaques identiques disposées côte à côte.

L'accrochage s'effectue par le recouvrement d'un premier bossage sur la plaque inférieure par un second bossage sur la plaque supérieure.

L'extérieur du premier bossage correspond à l'intérieur du second bossage.

## Revendications

1. Plaque à sol pour une installation de chauffage ou de refroidissement par le sol à tubes d'eau noyés dans une chape de béton, cette plaque étant d'une part équipée sur sa face supérieure d'un réseau de plots régulièrement espacés à contre dépouille externe définissant entre eux des intervalles en forme de trapèze et coopérant pour permettre la retenue des tubes de chauffage ou de refroidissement par le sol, et étant d'autre part destinée à être combinée à d'autres plaques à sol identiques ou analogues pour former un tapis à plots continu recouvrant le sol d'un local à chauffer ou à refroidir et recevant les tubes de chauffage ou de refroidissement par le sol pour les bloquer en place jusqu'à la coulée et la prise du béton,
**caractérisée en ce qu'**
elle est constituée d'une part par une plaque de base (10) thermiquement isolante formant semelle dont la face supérieure (5) est exempte de plots et essentiellement plane et d'autre part par une plaque de recouvrement (11) portant le réseau de plots (21) sur sa face supérieure et fixée à la plaque de base (10) par sa face inférieure (6) au moyen d'organes de fixation tels que des picots, une couche de colle, ou encore une bande adhésive double face.

2. Plaque à sol selon la revendication 1,
**caractérisée en ce que**
la plaque de base (10) est réalisée en polyuréthane ou en polystyrène extrudé.

3. Plaque à sol selon l'une quelconque des revendications 1 à 2,
**caractérisée en ce que**
la plaque de base (10) est équipée, sur ses bords, d'organes d'accrochage permettant l'assemblage d'une série de plaques à sol disposées côte à côte.

4. Plaque à sol selon l'une quelconque des revendications 1 et 2,
**caractérisée en ce que**
la plaque de recouvrement (11) est équipée, sur ses bords, d'organes d'accrochage permettant l'assemblage d'une série de plaques à sol disposées côte à côte.

5. Plaque à sol selon l'une quelconque des revendications 1 à 4,
**caractérisée en ce que**
les plots (21) sont reliés entre eux par des nervures de réception (7) des tubes de chauffage ou de refroidissement par le sol.

6. Plaque à sol selon l'une quelconque des revendications 1 à 5,
**caractérisée en ce que**
la plaque de recouvrement (11₁) est constituée par un élément réalisé en un matériau synthétique injecté, notamment en polystyrène, polypropylène ou polyéthylène.

7. Plaque à sol selon les revendications 5 et 6,
**caractérisée en ce que**
la plaque de recouvrement (11₁) est constituée par un élément grillagé comportant deux ensembles de nervures parallèles (7₁, 7₂) régulièrement espacées, essentiellement perpendiculaires entre eux,
un ensemble de languettes (8) inclinées vers l'extérieur et réparties selon un cercle étant prévu au niveau de chaque intersection, et définissant un plot 21.

8. Plaque à sol selon l'une quelconque des revendications 6 et 5,
**caractérisée en ce que**
la plaque de recouvrement (11₁) est équipée sur sa face inférieure d'une série de picots susceptibles de s'accrocher dans le matériau synthétique constitutif de la plaque de base (10) pour permettre l'assemblage de ces deux plaques.

9. Plaque à sol selon l'une quelconque des revendication 1 à 5,
**caractérisée en ce que**
la plaque de recouvrement (11₂) est constituée par une feuille en un matériau synthétique thermoformé.

10. Plaque à sol selon la revendication 9,
**caractérisée en ce que**
le matériau constitutif de la feuille thermoformée (11₂) comporte une charge en un matériau très conducteur de la chaleur.

11. Plaque à sol selon l'une quelconque des revendications 9 et 10,
**caractérisée en ce que**
la plaque de recouvrement est équipée d'un revêtement réfléchissant sur sa face inférieure.
